# EUROPÄISCHE PATENTSCHRIFT

(11) **EP 2 656 580 B1**
(45) Veröffentlichungstag und Bekanntmachung des Hinweises auf die Patenterteilung: **24.12.2014**
(21) Anmeldenummer: 12714986.2
(22) Anmeldetag: 30.03.2012
(51) Int. Cl.: H04L 29/06, G05B 19/41

(54) **VERFAHREN UND KOMMUNIKATIONSEINRICHTUNG ZUM KRYPTOGRAPHISCHEN SCHÜTZEN EINER FELDGERÄT-DATENKOMMUNIKATION**
METHOD AND COMMUNICATIONS DEVICE FOR CRYPTOGRAPHIC PROTECTION OF FIELD DEVICE DATA COMMUNICATION
PROCÉDÉ ET DISPOSITIF DE COMMUNICATION POUR LA PROTECTION CRYPTOGRAPHIQUE D'UNE COMMUNICATION DE DONNÉES D'UN APPAREIL DE TERRAIN

(30) Priorität: 12.04.2011 DE 102011007199
(43) Veröffentlichungstag der Anmeldung: 30.10.2013
(73) Patentinhaber: Siemens Aktiengesellschaft, 80333 München (DE)
(72) Erfinder: FALK, Rainer, 85586 Poing (DE)
(86) Internationale Anmeldenummer: PCT/EP2012/055787
(87) Internationale Veröffentlichungsnummer: WO 2012/139902

(56) Entgegenhaltungen:
- WO-A2-00/36807
- US-A1- 2007 056 032
- PROF DR FRITHJOF KLASEN: "Feldbus, Ethernet, Internet, TCP/IP - Alles klar?", GUMMERSBACHER INDUSTRIEFORUM, XX, XX, 15. November 2000 (2000-11-15), Seiten 1-25, XP002288533,

## Beschreibung

Die vorliegende Erfindung bezieht sich auf ein Verfahren und eine Kommunikationseinrichtung zum kryptographischen Schützen einer Feldgerät-Datenkommunikation.

### Stand der Technik

Industrielle Feldgeräte wie beispielsweise Steuergeräte für Bahn- und Gleisanlagen kommunizieren immer häufiger über offene Kommunikationsprotokolle wie TCP/IP anstatt über proprietäre Protokolle. Dabei nutzen sie öffentliche Netzwerke wie beispielsweise das Internet, um Kommunikationsdaten an eine Zentrale oder andere Feldgeräte zu übertragen. Um die Übertragung von Daten gegenüber Manipulation zu schützen, werden kryptographische Schutzmechanismen eingesetzt, beispielsweise MACsec, SSL/TLS, WS-Security oder IPsec.

Die US 2007/0056032 A1 offenbart dazu eine Technik, um eine sichere Virtual-Private-Network-Verbindung (VPN-Verbindung) bereitzustellen. Dabei wird die VPN-Verbindung zu einem Remote-Gateway über einen Netzwerkadapter mit einer Firmware auf einer Plattform hergestellt. Zudem wird ein Ereignis erzeugt, welches einem Betriebssystem-Netzwerktreiber über eine Bus-Treiber-Schnittstelle mitgeteilt wird. Auf eine Anforderung des Betriebssystem-Netzwerktreibers hin werden Netzwerk-Informationen geliefert.

Die WO 00/36807 offenbart weiterhin ein System und ein Verfahren zur Bereitstellung eines sicheren Zugangs zu entfernten Sensordaten über ein verschlüsseltes virtuelles privates Netzwerk. Das System verwendet eine skalierbare Architektur und umfasst einen zentralen Sensor-Server, welcher über das genannte Netzwerk mit einer Vielzahl von Zentren mit Sensoren verbunden ist. Das virtuelle private Netz kann über ein pa ketvermitteltes Netzwerk, wie das Internet durchgeführt werden, wobei entfernte Sensor-Monitore über einen Web-Browser betrieben werden können. Das System nutzt dabei verschiedene Authentifizierungs-und Sicherheits-Dienste, um die SensorDaten zu schützen.

In der Veröffentlichung "Feldbus, Ethernet, Internet, TCP/IP - Alles klar?" (XP002288533) werden schließlich allgemeine Aspekte über die Anbindung von Sensoren der Automatisierungstechnik über das Internet betrachtet. Die genannte Anbindung erfolgt dabei jedoch ohne ein VPN und ohne die Beachtung von Sicherheitsaspekten.

Häufig ist es nun aus Gründen der erforderlichen Rechenleistung, des Speicherbedarfs, der Zulassung oder der Abwärtskompatibilität nicht praktikabel, Feldgeräte selbst mit derartiger Netzwerktechnik auszustatten, so dass meist externe Geräte eingesetzt werden, um virtuelle private Netzwerke (VPN) zur Kommunikation von Feldgeräten über öffentliche Netzwerke wie das Internet aufzubauen und die erforderliche Sicherheit zu gewährleisten. Derartige externe Geräte müssen für die Kommunikation mit kryptographisch abgesicherten Daten konfiguriert werden. Hierzu ist ein geheimer kryptographischer Kommunikationsschlüssel notwendig, mit welchem Daten, die über das VPN versendet und empfangen werden, verschlüsselt und entschlüsselt werden können.

Die Konfiguration der externen Geräte ist aufwändig und fehleranfällig. Eine Möglichkeit ist es, die externen Geräte vor Ort aufzusuchen und zu konfigurieren bzw. zu rekonfigurieren. Diese Möglichkeit ist sehr zeitintensiv.

Es besteht daher ein Bedarf an Lösungen für eine einfache Konfiguration eines externen VPN-Geräts für Feldgeräte, mit welchem gleichzeitig eine hohe Sicherheit der kryptographischen Daten gewährleistet bleibt.

### Zusammenfassung der Erfindung

Eine Ausführungsform der vorliegenden Erfindung besteht daher in einem Verfahren zum kryptographischen Schützen einer Datenkommunikation eines Feldgeräts, mit den Schritten des Identifizierens des Feldgeräts durch eine Kommunikationseinrichtung auf der Basis eines Identifikationscodes des Feldgeräts, des Auswählens einer dem identifizierten Feldgerät zugeordneten VPN-Konfiguration durch die Kommunikationseinrichtung, des Aufbauens einer VPN-Verbindung auf der Basis der ausgewählten VPN-Konfiguration durch die Kommunikationseinrichtung, und des Übermittelns von Steuerdaten durch das Feldgerät an einen VPN-Server über die aufgebaute VPN-Verbindung.

Gemäß einer vorteilhaften Ausführungsform umfasst das Verfahren ein Authentisieren des Feldgeräts durch die Kommunikationseinrichtung mittels eines Authentisierungsverfahrens.

Vorzugsweise kann weiterhin ein Erfassen von Prüfsignalen von dem Feldgerät zugeordneten Manipulationssensoren zum Überwachen der Integrität des Feldgeräts erfolgen.

Das Auswählen einer VPN-Konfiguration durch die Kommunikationseinrichtung kann in einer bevorzugten Ausführungsform das Auswählen einer in einem Speicher der Kommunikationseinrichtung abgelegten VPN-Konfiguration umfassen.

Alternativ kann das Auswählen einer VPN-Konfiguration durch die Kommunikationseinrichtung das Empfangen und Speichern einer zugeordneten VPN-Konfiguration von einem Konfigurationsserver umfassen.

In einer vorteilhaften Ausführungsform erfolgt weiterhin ein Authentisieren des Feldgeräts über die VPN-Verbindung durch den VPN-Server.

Gemäß einer weiteren Ausführungsform kann ein Überwachen des Betriebszustands des Feldgeräts durch die Kommunikationseinrichtung, nachdem die VPN-Verbindung aufgebaut worden ist, und ein Trennen der VPN-Verbindung erfolgen, falls das Feldgerät nicht mehr mit der Kommunikationseinrichtung verbunden ist oder deaktiviert ist.

Die vorliegende Erfindung schafft gemäß einer weiteren Ausführungsform eine Kommunikationseinrichtung zum kryptographischen Schützen einer Datenkommunikation eines Feldgeräts, mit einer Kommunikationsschnittstelle, welche dazu ausgelegt ist, eine lokale Kommunikation mit einem an die Kommunikationsschnittstelle angeschlossenen Feldgerät aufzubauen, einer Recheneinrichtung, welche dazu ausgelegt ist, das Feldgerät über die Kommunikationsschnittstelle auf der Basis eines Identifikationscodes des Feldgeräts zu identifizieren, und eine dem identifizierten Feldgerät zugeordnete VPN-Konfiguration auszuwählen, und einer Netzwerkeinrichtung, welche dazu ausgelegt ist, eine VPN-Verbindung mit einem VPN-Server auf der Basis der ausgewählten VPN-Konfiguration aufzubauen, wobei die VPN-Verbindung dazu ausgelegt ist, Steuerdaten des Feldgeräts an einen VPN-Server zu übermitteln.

Weitere Modifikationen und Variationen ergeben sich aus den Merkmalen der abhängigen Ansprüche.

### Kurze Beschreibung der Figuren

Verschiedene Ausführungsformen und Ausgestaltungen der vorliegenden Erfindung werden nun in Bezug auf die beiliegenden Zeichnungen genauer beschrieben, in denen
- Fig. 1: eine schematische Darstellung einer VPN-Umgebung gemäß einer Ausführungsform der Erfindung;
- Fig. 2: eine schematische Darstellung eines Verfahrens zum kryptographischen Schützen einer Feldgerät-Datenkommunikation gemäß einer weiteren Ausführungsform der Erfindung; und
- Fig. 3: eine schematische Darstellung einer Kommunikationseinrichtung zum Aufbau eines VPN gemäß einer weiteren Ausführungsform der Erfindung zeigt.

Die beschriebenen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Gleiche Bezugszeichen bezeichnen dabei gleiche oder ähnlich wirkende Komponenten.

### Ausführliche Beschreibung der Erfindung

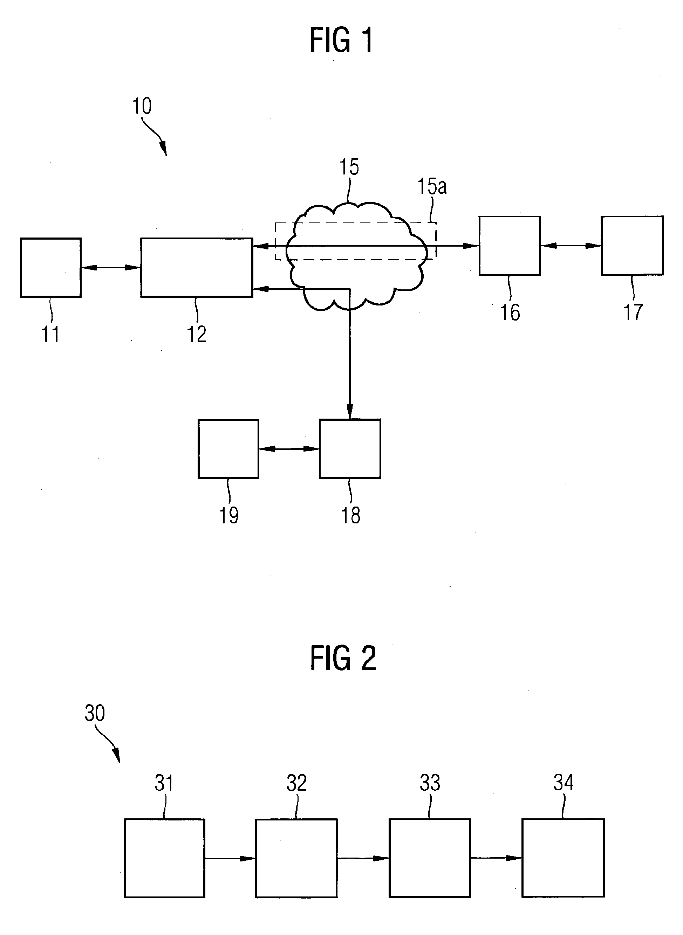

Fig. 1 zeigt eine schematische Darstellung einer VPN-Umgebung 10 gemäß einer Ausführungsform der Erfindung. Die VPN-Umgebung 10 umfasst ein Feldgerät 11. Das Feldgerät 11 kann beispielsweise ein Steuergerät für eine Bahn- oder Gleisanlage sein, zum Beispiel für eine Weiche, eine Schranke oder ein Signal. Das Feldgerät 11 kann jedoch jedes andere entfernt gelegene Gerät sein, wie beispielsweise eine Wetterstation oder eine Ampel. Damit das Feldgerät 11 mit einer zentralen Station 17, wie beispielsweise einem Stellwerk, Steuernachrichten und Steuerdaten austauschen kann, ist eine Kommunikationseinrichtung 12 vorhanden, die mit dem Feldgerät 11 verbunden ist und über ein Netzwerk 15 mit einer Gegenstelle 16 kommuniziert, die ihrerseits mit der zentralen Station 17 verbunden ist. Die Kommunikationseinrichtung 12 kann als externes Gerät aufgebaut oder in dem Feldgerät 11 integriert sein.

Die Übertragung der Steuerdaten erfolgt über das Netzwerk 15, welches ein öffentliches Netzwerk wie beispielsweise das Internet, ein Mobilfunknetzwerk wie beispielsweise GPRS, UMTS, LTE oder WiMAX, ein Drahtlosnetzwerk wie beispielsweise WLAN, ein Ethernet-Netzwerk, ein Token-Ring-Netzwerk, ein DSL-Netzwerk oder ein anderes vergleichbares Netzwerk sein kann. Die Steuerdaten, die über das Netzwerk 15 übertragen werden, sind daher potentiellen Angriffen ausgesetzt. Daher ist für die Kommunikation der Kommunikationseinrichtung 12 mit der Gegenstelle 16 ein virtuelles privates Netzwerk 15a (VPN) eingerichtet, über welches Daten mit kryptographischem Schutz über entsprechende Verschlüsselung versandt und empfangen werden können. Zur Verschlüsselung kann jede bekannte Verschlüsselungstechnik wie beispielsweise IPsec, IKE, EAP, SSL/TLS, MACsec, L2TP, PPTP, PGP, S/MIME oder ähnliche Techniken eingesetzt werden. Das Verschlüsseln kann dabei als eine Berechnung einer kryptographischen Prüfsumme (Message Authentication Code, Digitale Signatur), die Entschlüsselung als das Prüfen einer kryptographischen Prüfsumme ausgestaltet sein.

Die Kommunikationseinrichtung 12 verfügt daher über einen (oder mehrere) Kommunikationsschlüssel, mit dem die zu sendenden Steuerdaten des Feldgerätes 11 kryptographisch verschlüsselt und die zu empfangenden Daten für das Feldgerät 11 kryptographisch entschlüsselt werden. Ein Kommunikationsschlüssel kann direkt verwendet werden. Ebenso kann der Kommunikationsschlüssel in einem Authentisierungs- und Schlüsselvereinbarungsprotokoll wie beispielsweise dem IKE-Protokoll verwendet werden, um einen Sitzungsschlüssel einzurichten. Der eingerichtete Sitzungsschlüssel kann dann zur kryptographisch geschützten Übertragung von Steuernachrichten bzw. Steuerdaten mit der Gegenstelle 16 verwendet werden.

Die VPN-Umgebung 10 umfasst weiterhin einen Konfigurationsserver 18, der über sogenannte "Bootstrapping"-Funktionen verfügt, beispielsweise einen Authentifizierungsserver. Bootstrapping bezeichnet ein Vermitteln zwischen einander zuvor unbekannten Endgeräten und Servern, welches die einseitige oder wechselseitige Authentifizierung und - darauf aufbauend - den Austausch geheimer Schlüssel gestattet, wodurch eine erweiterte Nutzung von Anwendungen möglich wird, die eine Authentifizierung und eine gesicherte Kommunikationsbeziehung voraussetzen. Der Konfigurationsserver 18 verfügt über eine Adresse, beispielsweise eine IP-Adresse oder eine URL, die in der Kommunikationseinrichtung 12 fest einprogrammiert oder variabel einstellbar sein kann. In einer Ausführungsform ist die Adresse des Konfigurationsservers 18 eine Adresse des Herstellers der Kommunikationseinrichtung 12. In einer weiteren Ausführungsform ist die Adresse des Konfigurationsservers 18 eine Adresse des Betreibers der Kommunikationseinrichtung 12. Es kann jedoch auch möglich sein, über eine andere Adresse von der Kommunikationseinrichtung 12 zunächst eine weitere Adresse eines für die jeweilige Kommunikationseinrichtung 12 zuständigen Servers 19 zu ermitteln, und daraufhin die weitere Adresse zum Aufbau einer Bootstrapping-Verbindung mit dem Konfigurationsserver 18 aufzubauen. Es kann dabei möglich sein, für die Auswahl des jeweils zugehörigen Konfigurationsservers 18 zu einer Kommunikationseinrichtung 12 eine Datenbank zu konsultieren. Weiterhin kann es möglich sein, die Auswahl der Adresse des entsprechenden Konfigurationsservers 18 von einem physikalischen Standort des Feldgerätes 11, beispielsweise von Satellitennavigationsdaten wie GPS- oder GA-LILEO-Daten oder anderen Raumkoordinaten abhängig zu machen. Es kann auch möglich sein, dass der für die Konfiguration der Kommunikationseinrichtung 12 zuständige Konfigurationsserver 18 über eine in der Kommunikationseinrichtung 12 und/oder dem Feldgerät 11 gespeicherte Identifikationsnummer, beispielsweise eine MAC-Adresse, ermittelt wird. Der Konfigurationsserver 18 kann auch in die Gegenstelle 16 integriert sein, oder es kann möglich sein, dass die Gegenstelle 16 über entsprechende Bootstrapping-Funktionalität verfügt. In einer Variante kann der Konfigurationsserver 18 auch direkt mit der Kommunikationseinrichtung 12 verbunden sein. Es sollte klar sein, dass eine Vielzahl weitere Möglichkeiten für das Zuweisen eines Konfigurationsservers 18 für eine jeweilige Kommunikationseinrichtung 12 möglich ist.

Eine VPN-Konfiguration umfasst beispielsweise Informationen über die Adresse des Konfigurationsservers 18, die Adresse der Gegenstelle 16, einen öffentlichen Schlüssel bzw. ein digitales Zertifikat der Gegenstelle 16, das zu verwendende VPN-Protokoll, eine Beschreibung der Sicherheitseinstellungen, beispielsweise des Schlüssels und des Modus für die jeweilige VPN-Verbindung 15a und/oder Filterregeln über zulässigen Datenverkehr. Diese Informationen können textuell, beispielsweise als Attribut-Werte-Paar, oder als XML-Dokument vorliegen. Es kann weiterhin auch möglich sein, mehrere VPN-Verbindungen 15a für ein Feldgerät 11 aufzubauen, um beispielsweise unterschiedliche Verkehrsarten, beispielsweise Steuerung, Überwachung, Wartungszugriff und ähnliche Funktionen in separaten VPN-Verbindungen 15a zu realisieren.

In einer Variante kann die VPN-Konfiguration auch eine Identifikationsnummer des Feldgeräts 11, beispielsweise eine MAC-Adresse des Feldgeräts 11, eine EAN-Nummer, eine Seriennummer des Herstellers oder eine ähnliche Identifikationsinformation umfassen. Diese Identifikationsnummer kann beispielsweise von einem elektronischen Typenschild des Feldgeräts 11 über RFID oder über eine Kommunikationsschnittstelle des Feldgeräts 11 ausgelesen werden. Beispielsweise kann das Feldgerät 11 über einen Geräteschlüssel oder ein digitales Gerätezertifikat, beispielsweise nach dem ITU-T-Standard X.509 umfassen. In diesem Fall können aus dem Gerätezertifikat beispielsweise mittels einer Hash-Funktion abgeleitete Werte oder einzelne Felder oder Attribute des Gerätezertifikats als Identifikationsnummer des Feldgeräts 11 verwendet werden.

Weiterhin kann es vorgesehen sein, dass jeder VPN-Konfiguration ein VPN-Identifikationscode zugeordnet ist, welcher in der VPN-Konfiguration eincodiert oder aus dieser ableitbar sein kann, beispielsweise indem einzelne Parameter oder Felder der Konfigurationsbeschreibung oder daraus mittels einer Hash-Funktion abgeleitete Werte verwendet werden. Der VPN-Identifikationscode kann dazu verwendet werden, um von dem Konfigurationsserver 18 abzufragen, welchem Feldgerät 11 die entsprechende VPN-Konfiguration zugeordnet ist. Der VPN-Konfiguration kann über den VPN-Identifikationscode eine Identifikationsnummer eines Feldgeräts 11 zugeordnet und dem Konfigurationsserver 18 bekannt gemacht werden. Dazu sendet die Kommunikationseinrichtung 12 eine Registrierungsnachricht mit dem VPN-Identifikationscode und der zugeordneten Identifikationsnummer des Feldgeräts 11 an den Konfigurationsserver 12 und/oder an die Gegenstelle 16.

Fig. 2 zeigt eine schematische Darstellung eines Verfahrens 30 zum kryptographischen Schützen einer Feldgerät-Datenkommunikation mithilfe einer Kommunikationseinrichtung.

In einem ersten Schritt 31 erfolgt ein Identifizieren eines an die Kommunikationseinrichtung angeschlossenen Feldgeräts. Das Identifizieren kann beispielsweise das Auslesen einer dem Feldgerät zugeordneten Identifikationsnummer umfassen. Vorzugsweise kann gleichzeitig mit dem Identifizieren des Feldgeräts ein Authentisieren des Feldgeräts erfolgen, beispielsweise mithilfe eines Challenge-Response-Verfahrens, bei dem Prüfdaten, die sogenannte "Challenge", durch die Kommunikationseinrichtung an das Feldgerät übermittelt werden, und durch das Feldgerät aus der Challenge ein Prüfwert generiert wird, dessen Übereinstimmung mit einer erwarteten Antwort, der sogenannten "Response", durch die Kommunikationseinrichtung ermittelt wird, um die Authentizität des Feldgeräts verifizieren zu können. Durch die Authentisierung des Feldgeräts kann vorteilhafterweise sichergestellt werden, dass die über eine VPN-Verbindung gesendeten Daten eineindeutig einem bestimmten Feldgerät zugeordnet werden können.

Dabei kann von der Kommunikationseinrichtung auch geprüft werden, ob das Feldgerät direkt verbunden ist, beispielsweise über Überprüfung einer Layer2-Konnektivität oder über eine Laufzeitmessung der übertragenen Signale. Dadurch kann verhindert werden, dass die Kommunikationseinrichtung von ihrem eigentlichen Verwendungsort entfernt wird. Darüber hinaus kann von der Kommunikationseinrichtung die Integrität des Feldgeräts überprüft werden. Ferner kann die Kommunikationseinrichtung Prüfsignale von Vorrichtungen des Feldgeräts oder eines Gehäuses, in dem das Feldgerät angeordnet ist, empfangen und auf eventuell vorliegenden Manipulationen oder unerwünschte Eingriffe von außen untersuchen. Die Prüfsignale können dabei beispielsweise von Manipulationssensoren in oder an dem Gehäuse oder in dem Feldgerät selbst eingelesen werden.

In einem zweiten Schritt 32 erfolgt ein Auswählen einer oder gegebenenfalls mehrerer VPN-Konfiguration für den Aufbau einer oder gegebenenfalls mehrerer VPN-Verbindung durch die Kommunikationseinrichtung, über die das Feldgerät Steuerdaten mit einem VPN-Server und/oder einer VPN-Gegenstelle austauschen kann. Dabei kann beispielsweise eine in der Kommunikationseinrichtung gespeicherte VPN-Konfiguration verwendet werden. Die Kommunikationseinrichtung kann dazu über einen Speicher verfügen, in dem VPN-Konfigurationen vorinstalliert oder vorkonfiguriert sind. Die gespeicherten VPN-Konfigurationen können auf eine Zuordnung zu dem in Schritt 31 identifizierten Feldgerät hin überprüft werden. Sollte dabei eine dem Feldgerät zugeordnete VPN-Konfiguration ermittelt werden, kann diese VPN-Konfiguration ausgewählt werden. Dabei kann alternativ auch überprüft werden, ob die ausgewählte VPN-Konfiguration aktuell noch gültig ist.

Alternativ kann in Schritt 32 zum Auswählen einer VPN-Konfiguration ein Konfigurationsserver kontaktiert werden, dem die ermittelten Identifikationsdaten des Feldgeräts übermittelt werden. Der Konfigurationsserver kann dann in Abhängigkeit von den übermittelten Identifikationsdaten des Feldgeräts eine VPN-Konfiguration aus einer Datenbank heraussuchen oder speziell für das identifizierte Feldgerät dynamisch erstellen und der Kommunikationseinrichtung zur Verfügung stellen. Die Kommunikation der Kommunikationseinrichtung mit dem Konfigurationsserver kann dabei gesichert erfolgen, indem sich die Kommunikationseinrichtung über ein öffentliches Netzwerk wie beispielsweise das Internet oder ein Mobilfunknetzwerk gegenüber dem Konfigurationsserver authentisiert. Dies kann beispielsweise über in der Kommunikationseinrichtung speziell vorgesehene Kommunikationsschlüssel erfolgen, so dass die Kommunikationseinrichtung beispielsweise über SSL/TLS oder IPsec kommunizieren kann.

Der Konfigurationsserver übermittelt eine dem Feldgerät zugeordnete VPN-Konfiguration mit entsprechenden VPN-Konfigurationsdaten an die Kommunikationseinrichtung. Die Kommunikationseinrichtung kann diese VPN-Konfiguration speichern und dem identifizierten Feldgerät intern zuordnen.

In einem dritten Schritt 33 erfolgt ein Aufbauen einer VPN-Verbindung mit einem VPN-Server über ein Netzwerk, wie beispielsweise das Internet, ein Mobilfunknetzwerk oder ein ähnliches Netzwerk. Die VPN-Verbindung wird dabei durch die Kommunikationseinrichtung gemäß der ausgewählten VPN-Konfiguration eingerichtet. Dabei können beispielsweise auch mehrere VPN-Verbindungen gemäß verschiedener VPN-Konfigurationen für das gleiche Feldgerät aufgebaut werden. Über die aufgebaute VPN-Verbindung kann dann beispielsweise ein Identifizieren und/oder Authentisieren des Feldgeräts durch den VPN-Server vorgenommen werden. Wenn dabei die Identifikation des Feldgeräts mit dem dieser VPN-Konfiguration zugeordneten Feldgerät übereinstimmt, kann die VPN-Verbindung seitens des VPN-Servers freigegeben werden.

In einem vierten Schritt 34 erfolgt ein Übertragen von Steuerdaten des Feldgeräts über die durch die Kommunikationseinrichtung für das Feldgerät aufgebaute VPN-Verbindung an den VPN-Server. Gleichzeitig können Steuerdaten von dem VPN-Server über die VPN-Verbindung an das Feldgerät übertragen werden. Dabei werden die Steuerdaten jeweils über die die VPN-Verbindung aufrechterhaltende Kommunikationseinrichtung übertragen. Die Kommunikationseinrichtung kann dazu ausgelegt sein, die VPN-Verbindung so lange aufrechtzuerhalten, solange das Feldgerät mit der Kommunikationseinrichtung verbunden bleibt. Dazu kann die Kommunikationseinrichtung vorzugsweise periodisch eine Überprüfung der lokalen Verbindung mit dem Feldgerät vornehmen. Sobald das Feldgerät nicht mehr verbunden oder deaktiviert ist, kann die Kommunikationseinrichtung die VPN-Verbindung trennen bzw. deaktivieren.

Der VPN-Server kann über die VPN-Konfiguration eine eindeutige Zuordnung zu einem Feldgerät treffen. Dazu kann er die VPN-Konfiguration mit einer vorbestimmten Liste abgleichen oder die VPN-Konfigurationsdaten von dem Konfigurationsserver abrufen. Der VPN-Server kann während der Kommunikation mit dem Feldgerät über die VPN-Verbindung eine Filterung des Datenverkehrs derart vornehmen, dass nur dem Feldgerät eindeutig zuordenbare Datenpakete an einen Steuerungsrechner wie beispielsweise ein Stellwerk weitergeleitet werden. Dazu können in den Datenpaketen enthaltene Identifikationsinformationen, beispielsweise MAC-Adressen, IP-Adressen, DNS-Namen, SIP-URIs (Session Initiation Protocol Uniform Ressource Identifier) oder ähnliche Informationen ausgewertet werden.

Die Kommunikationseinrichtung kann in einer Ausführungsform auch VPN-Verbindungen für mehrere Feldgeräte aufbauen, wobei entweder eine VPN-Verbindung für jedes der Feldgeräte aufgebaut werden kann, oder die Feldgeräte eine Feldgerätegruppe bilden, die über eine der Feldgerätegruppe zugeordnete VPN-Verbindung kommunizieren können. Dabei treten alle Feldgeräte der Feldgerätegruppe gegenüber der Kommunikationseinrichtung und/oder dem VPN-Server als ein (virtuelles) Feldgerät auf.

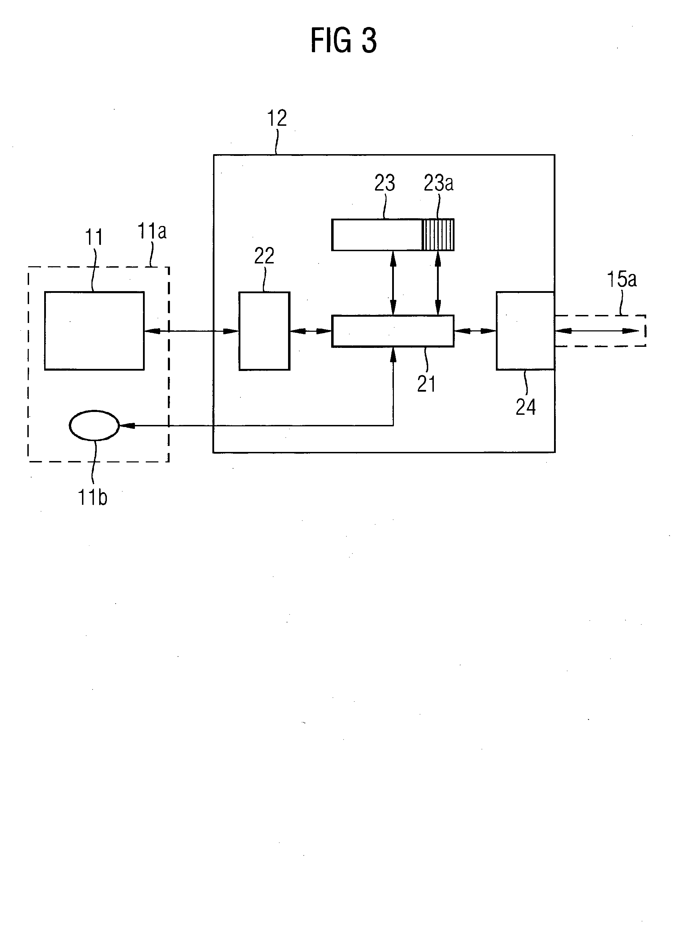

Fig. 3 zeigt eine schematische Darstellung einer Kommunikationseinrichtung 12 mit einer Recheneinrichtung 21, einer Kommunikationsschnittstelle 22, einem Speicher 23 und einer Netzwerkeinrichtung 24.

Die Kommunikationseinrichtung 12 kann über die Kommunikationsschnittstelle 22 mit einem Feldgerät 11 kommunizieren. Insbesondere kann die Kommunikationseinrichtung 12 über die Kommunikationsschnittstelle 22 eine Identifizierung und gegebenenfalls eine Authentisierung des Feldgeräts 11 vornehmen. In dem Speicher 23 können VPN-Konfigurationen vorinstalliert werden und/oder von einem Konfigurationsserver empfangene VPN-Konfigurationen abgespeichert werden. Der Speicher 23 kann beispielsweise einen gesicherten Speicherbereich 23a umfassen, in dem Konfigurationsdaten bzw. Kommunikationsschlüssel für eine gesicherte Kommunikation der Kommunikationseinrichtung 12 mit einem Konfigurationsserver abgelegt sind. Der Speicher 23 kann beispielsweise ein Speicherbaustein sein, in welchem dauerhaft und wiederbeschreibbar Konfigurationseinstellungen der Kommunikationseinrichtung 12 ablegbar sind, beispielsweise ein serielles EEPROM, ein Flash-Speicher oder eine vergleichbare Speichereinrichtung.

Die Recheneinrichtung 21 kann dazu ausgelegt sein, Prüfsignale von Manipulationssensoren 11b zu empfangen, die in dem Feldgerät 11 oder einem Gehäuse 11a, in dem das Feldgerät 11 angeordnet sein kann, zu empfangen und auszuwerten. Der Sensor 11b kann beispielsweise ein "Tamper"-Sensor sein, also ein Sensor, welcher eine physikalische Manipulation an dem Feldgerät 11, an Teilen des Feldgeräts 11 oder dem Gehäuse 11a erkennen kann. Die Recheneinrichtung 21 kann weiterhin die Identifikation und Authentisierung des Feldgeräts 11 vornehmen sowie eine VPN-Verbindung 15a mit einem VPN-Server in Abhängigkeit von einer für das Feldgerät 11 ausgewählten VPN-Konfiguration aufbauen und überwachen.

Die Kommunikationseinrichtung 12 umfasst eine Netzwerkeinrichtung 24, über die eine VPN-Verbindung 15a mit einem VPN-Server aufgebaut werden kann. Dabei kann die VPN-Verbindung 15a beispielsweise über das Internet, ein Mobilfunknetzwerk wie beispielsweise GPRS, UMTS, LTE oder WiMAX, ein Drahtlosnetzwerk wie beispielsweise WLAN, ein Ethernet-Netzwerk, ein Token-Ring-Netzwerk oder ein anderes vergleichbares Netzwerk aufgebaut werden.

## Patentansprüche

1. Verfahren (30) zum kryptographischen Schützen einer Datenkommunikation eines Feldgeräts (11), mit den Schritten:
Identifizieren des Feldgeräts (11) durch eine Kommunikationseinrichtung (12) auf der Basis eines Identifikationscodes des Feldgeräts (11);
Auswählen einer dem identifizierten Feldgerät (11) zugeordneten VPN-Konfiguration durch die Kommunikationseinrichtung (12);
Aufbauen einer VPN-Verbindung (15a) auf der Basis der ausgewählten VPN-Konfiguration durch die Kommunikationseinrichtung (12); und
Übermitteln von Steuerdaten durch das Feldgerät (11) an einen VPN-Server (16) über die aufgebaute VPN-Verbindung.

2. Verfahren (30) nach Anspruch 1, weiterhin mit dem Schritt:
Authentisieren des Feldgeräts (11) durch die Kommunikationseinrichtung (12) mittels eines Authentisierungsverfahrens.

3. Verfahren (30) nach einem der Ansprüche 1 und 2, weiterhin mit dem Schritt:
Erfassen von Prüfsignalen von dem Feldgerät (11) zugeordneten Manipulationssensoren (11b) zum Überwachen der Integrität des Feldgeräts (11).

4. Verfahren (30) nach einem der Ansprüche 1 bis 3, wobei das Auswählen einer VPN-Konfiguration durch die Kommunikationseinrichtung (12) das Auswählen einer in einem Speicher (23) der Kommunikationseinrichtung (12) abgelegten VPN-Konfiguration umfasst.

5. Verfahren (30) nach einem der Ansprüche 1 bis 3, wobei das Auswählen einer VPN-Konfiguration durch die Kommunikationseinrichtung (12) das Empfangen und Speichern einer zugeordneten VPN-Konfiguration von einem Konfigurationsserver (18) umfasst.

6. Verfahren (30) nach einem Ansprüche 1 bis 5, weiterhin mit dem Schritt:
Authentisieren des Feldgeräts (11) über die VPN-Verbindung (15a) durch den VPN-Server (16).

7. Verfahren (30) nach einem Ansprüche 1 bis 6, weiterhin mit den Schritten:
Überwachen des Betriebszustands des Feldgeräts (11) durch die Kommunikationseinrichtung (12), nachdem die VPN-Verbindung (15a) aufgebaut worden ist; und
Trennen der VPN-Verbindung (15a), falls das Feldgerät (11) nicht mehr mit der Kommunikationseinrichtung (12) verbunden ist oder deaktiviert ist.

8. Kommunikationseinrichtung (12) zum kryptographischen Schützen einer Datenkommunikation eines Feldgeräts (11), mit:
einer Kommunikationsschnittstelle (22), welche dazu ausgelegt ist, eine lokale Kommunikation mit einem an die Kommunikationsschnittstelle (22) angeschlossenen Feldgerät (11) aufzubauen;
einer Recheneinrichtung (21), welche dazu ausgelegt ist, das Feldgerät (11) über die Kommunikationsschnittstelle (22) auf der Basis eines Identifikationscodes des Feldgeräts (11) zu identifizieren, und eine dem identifizierten Feldgerät zugeordnete VPN-Konfiguration auszuwählen; und
einer Netzwerkeinrichtung (24), welche dazu ausgelegt ist, eine VPN-Verbindung (15a) mit einem VPN-Server (16) auf der Basis der ausgewählten VPN-Konfiguration aufzubauen, wobei die VPN-Verbindung (15a) dazu ausgelegt ist, Steuerdaten des Feldgeräts (11) an den VPN-Server (16) zu übermitteln.

9. Kommunikationseinrichtung (12) nach Anspruch 8, wobei die Recheneinrichtung (21) weiterhin dazu ausgelegt ist, das Feldgerät (11) mittels eines Authentisierungsverfahrens zu authentisieren.

10. Kommunikationseinrichtung (12) nach einem der Ansprüche 8 und 9, wobei die Recheneinrichtung (21) weiterhin dazu ausgelegt ist, Prüfsignale von dem Feldgerät (11) zugeordneten Manipulationssensoren (11b) zum Überwachen der Integrität des Feldgeräts (11) zu empfangen.

11. Kommunikationseinrichtung (12) nach einem der Ansprüche 8 bis 10, weiterhin mit:
einem Speicher (23), in welchem eine Vielzahl von VPN-Konfigurationen abgelegt ist, aus welchen die Recheneinrichtung (21) eine VPN-Konfiguration auswählt.

12. Kommunikationseinrichtung (12) nach einem der Ansprüche 8 bis 10, wobei die Recheneinrichtung (21) weiterhin dazu ausgelegt ist, eine dem Feldgerät (11) zugeordnete VPN-Konfiguration von einem Konfigurationsserver (18) über die Netzwerkeinrichtung (24) zu empfangen.

13. Kommunikationseinrichtung (12) nach einem der Ansprüche 8 bis 12, wobei die Recheneinrichtung (21) weiterhin dazu ausgelegt ist, den Betriebszustand des Feldgeräts (11) zu überwachen, und eine aufgebaute VPN-Verbindung (15a) zu trennen, falls das Feldgerät (11) nicht mehr mit der Kommunikationseinrichtung (12) verbunden ist oder deaktiviert ist.

## Claims

1. Method (30) for the cryptographic protection of data communication by a field device (11), having the steps of:
identification of the field device (11) by a communication device (12) on the basis of an identification code of the field device (11);
selection of a VPN configuration associated with the identified field device (11) by the communication device (12);
set-up of a VPN connection (15a) on the basis of the selected VPN configuration by the communication device (12); and
transmission of control data by the field device (11) to a VPN server (16) via the set-up VPN connection.

2. Method (30) according to Claim 1, also having the step of:
authentication of the field device (11) by the communication device (12) by means of an authentication method.

3. Method (30) according to either of Claims 1 and 2, also having the step of:
capture of check signals from manipulation sensors (11b) associated with the field device (11) for the purpose of monitoring the integrity of the field device (11).

4. Method (30) according to one of Claims 1 to 3, wherein the selection of a VPN configuration by the communication device (12) comprises the selection of a VPN configuration stored in a memory (23) of the communication device (12).

5. Method (30) according to one of Claims 1 to 3, wherein the selection of a VPN configuration by the communication device (12) comprises the reception and storage of an associated VPN configuration from a configuration server (18).

6. Method (30) according to one of Claims 1 to 5, also having the step of:
authentication of the field device (11) via the VPN connection (15a) by the VPN server (16).

7. Method (30) according to one of Claims 1 to 6, also having the steps of:
monitoring of the operating state of the field device (11) by the communication device (12) after the VPN connection (15a) has been set up; and
severing of the VPN connection (15a) if the field device (11) is no longer connected to the communication device (12) or is deactivated.

8. Communication device (12) for the cryptographic protection of data communication by a field device (11), having:
a communication interface (22) that is designed to set up local communication with a field device (11) connected to the communication interface (22);
a computation device (21) that is designed to identify the field device (11) via the communication interface (22) on the basis of an identification code of the field device (11), and to select a VPN configuration associated with the identified field device; and
a network device (24) that is designed to set up a VPN connection (15a) to a VPN server (16) on the basis of the selected VPN configuration, wherein the VPN connection (15a) is designed to transmit control data from the field device (11) to the VPN server (16).

9. Communication device (12) according to Claim 8, wherein the computation device (21) is also designed to authenticate the field device (11) by means of an authentication method.

10. Communication device (12) according to either of Claims 8 and 9, wherein the computation device (21) is also designed to receive check signals from manipulation sensors (11b) associated with the field device (11) for the purpose of monitoring the integrity of the field device (11).

11. Communication device (12) according to one of Claims 8 to 10, also having:
a memory (23) that stores a multiplicity of VPN configurations from which the computation device (21) selects one VPN configuration.

12. Communication device (12) according to one of Claims 8 to 10, wherein the computation device (21) is also designed to receive a VPN configuration associated with the field device (11) from a configuration server (18) via the network device (24).

13. Communication device (12) according to one of Claims 8 to 12, wherein the computation device (21) is also designed to monitor the operating state of the field device (11), and to sever a set-up VPN connection (15a) if the field device (11) is no longer connected to the communication device (12) or is deactivated.

## Revendications

1. Procédé (30) pour la protection cryptographique d'une communication de données d'un appareil de terrain (11), comportant les étapes suivantes :
identification de l'appareil de terrain (11) par un dispositif de communication (12) sur la base d'un code d'identification de l'appareil de terrain (11) ;
sélection, par le dispositif de communication (12), d'une configuration VPN associée à l'appareil de terrain identifié (11) ;
établissement, par le dispositif de communication (12), d'une liaison VPN (15a) sur la base de la configuration VPN sélectionnée ; et
transmission de données de commande par l'appareil de terrain (11) à un serveur VPN (16) via la liaison VPN établie.

2. Procédé (30) selon la revendication 1, comportant en outre l'étape suivante :
authentification de l'appareil de terrain (11) par le dispositif de communication (12) au moyen d'un procédé d'identification.

3. Procédé (30) selon l'une des revendications 1 et 2, comportant en outre l'étape suivante :
détection de signaux de contrôle de détecteurs de manipulation (11b) associés à l'appareil de terrain (11) pour surveiller l'intégrité de l'appareil de terrain (11).

4. Procédé (30) selon l'une des revendications 1 à 3, la sélection d'une configuration VPN par le dispositif de communication (12) incluant la sélection d'une configuration VPN déposée dans une mémoire (23) du dispositif de communication (12).

5. Procédé (30) selon l'une des revendications 1 à 3, la sélection d'une configuration VPN par le dispositif de communication (12) incluant la réception et le stockage d'une configuration VPN associée d'un serveur de configuration (18).

6. Procédé (30) selon l'une des revendications 1 à 5, comportant en outre l'étape suivante :
authentification de l'appareil de terrain (11) via la liaison VPN (15a) par le serveur VPN (16).

7. Procédé (30) selon l'une des revendications 1 à 6, comportant en outre les étapes suivantes :
surveillance de l'état de service de l'appareil de terrain (11) par le dispositif de communication (12) après que la liaison VPN (15a) a été établie ; et
coupure de la liaison VPN (15a) si l'appareil de terrain (11) n'est plus relié au dispositif de communication (12) ou est désactivé.

8. Dispositif de communication (12) pour la protection cryptographique d'une communication de données d'un appareil de terrain (11), comportant :
une interface de communication (22) qui est conçue pour établir une communication locale avec un appareil de terrain (11) raccordé à l'interface de communication (22) ;
un dispositif informatique (21) qui est conçu pour identifier l'appareil de terrain (11) via l'interface de communication (22) sur la base d'un code d'identification de l'appareil de terrain (11) et sélectionner une configuration VPN associée à l'appareil de terrain identifié ; et
un dispositif de réseau (24) qui est conçu pour établir une liaison VPN (15a) avec un serveur VPN (16) sur la base de la configuration VPN sélectionnée, la liaison VPN (15a) étant conçue pour transmettre des données de commande de l'appareil de terrain (11) au serveur VPN (16).

9. Dispositif de communication (12) selon la revendication 8, le dispositif informatique (21) étant en outre conçu pour authentifier l'appareil de terrain (11) au moyen d'un procédé d'authentification.

10. Dispositif de communication (12) selon l'une des revendications 8 et 9, le dispositif informatique (21) étant en outre conçu pour recevoir des signaux de contrôle de détecteurs de manipulation (11b) associés à l'appareil de terrain (11) pour la surveillance de l'intégrité de l'appareil de terrain (11).

11. Dispositif de communication (12) selon l'une des revendications 8 à 10, comportant en outre une mémoire (23) dans laquelle est déposée une pluralité de configurations VPN parmi lesquelles le dispositif informatique (21) choisit une configuration VPN.

12. Dispositif de communication (12) selon l'une des revendications 8 à 10, le dispositif informatique (21) étant en outre conçu pour recevoir d'un serveur de configuration (18), via le dispositif de réseau (24), une configuration VPN associée à l'appareil de terrain (11).

13. Dispositif de communication (12) selon l'une des revendications 8 à 12, le dispositif informatique (21) étant en outre conçu pour surveiller l'état de service de l'appareil de terrain (11) et pour couper une liaison VPN établie (15a) si l'appareil de terrain (11) n'est plus relié au dispositif de communication (12) ou est désactivé.
